# EUROPEAN PATENT APPLICATION

(11) **EP 4 316 417 A1**
(43) Date of publication of application: **07.02.2024**
(21) Application number: 22775866.1
(22) Date of filing: 28.03.2022
(51) Int. Cl.: A61C 17/16, A61C 17/22, A61C 17/34

(54) **TOOTHBRUSH**

(30) Priority: 26.03.2021 JP 2021053478
(71) Applicant: Genics Co., Ltd., Tokyo, 169-0051 (JP)
(72) Inventor: SAKAEDA Gen, Tokyo 169-0051 (JP); YOKOYAMA Hiroya, Tokyo 169-0051 (JP)
(74) Representative: Marks & Clerk LLP
(86) International application number: PCT/JP2022/014815
(87) International publication number: WO 2022/203085

(57) **Abstract**

To enable a toothbrush to adapt to a variety of dental arches. The toothbrush is for performing tooth brushing action by providing a lateral motion within a plane in which a dentition exists. The toothbrush 200 comprises a brush member 210, a guide 221 for guiding a movement of the brush member 210, a guide connector 222 for connecting the guide 221 to a drive source and a brush frame 223 that is connected to the guide 221 for fixing the brush member 210. The guide 221 has a first region 221A and a second region 221B with a lower elastic modulus than the first region 221A. A force applied from the dentition to the brush member 210 fixed to the brush frame 223 is transmitted to the second region 221B by way of the first region 221A and the brush frame 223, thereby causing deformation of the second region 221B due to the relatively lower elasticity of the second region 221B. The deformation fulfills the role of guiding the movement of the brush member 210 to adapt to the dental arch on which the brush member is being pressed.

## Description

### TECHNICAL FIELD

The present invention relates to a toothbrush.

### BACKGROUND ART

Toothbrushes are generally equipped with a brush portion at one end of a gripping member that is gripped by a user. The brush portion is inserted into an oral cavity, and stains are removed by vibration applied by the user with the brush portion in contact with each tooth from front or back of the tooth.

For the purpose of automating tooth brushing, facilitating tooth brushing for the elderly, etc., there is a need for a toothbrush that enables users to easily brush multiple teeth comprising a dentition, instead of brushing each tooth individually. The patent document 1 discloses a tooth brushing apparatus in which a user bites a pair of front teeth holding members with the upper and lower front teeth to hold the apparatus, and a unit for tooth brushing action can be driven to perform tooth brushing action in the movable space between the pair of front tooth holding members.

FIG. 1 is a diagonal view of an automatic tooth brushing apparatus described in the patent document 1. The automatic tooth brushing apparatus 10 comprises a unit 16 for tooth brushing action driven by a drive unit 12, and the unit 16 has a plurality of brush attachment point units 28 for attaching polishing members, i.e., brushes. By biting a pair of front teeth holding members 18 and 19, during tooth brushing action, the automatic tooth brushing apparatus 10 is held cantilevered with the front teeth as supporting points. The unit 16 is capable of a vertical movement perpendicular to the plane in which a dentition exists and a horizontal movement within the plane in which the dentition exists.

### PRIOR ART

### PATENT DOCUMENTS

Patent Document 1: Patent No.6511579

### SUMMARY OF INVENTION

### TECHNICAL PROBLEM

The unit 16 described in the patent document 1 was designed based on the average dental arch shape so that it can be applied to many users. In reality, shapes of dentitions, namely dental arches are said to be classified into square, round square, round, and round V-shape according to Thomson's classification, and there are individual differences. Therefore, for some users, the brush portion cannot sufficiently contact a wide area of the dentition when the unit 16 is moved laterally. Also, the shapes of an upper dentition and a lower dentition are different.

The present invention was made in view of the above problem, and is intended to make it adaptable to a variety of dental arches in a toothbrush for performing tooth brushing action by providing a lateral motion in a plane in which a dentition exists. Here, the expression "a plane in which a dentition exists" means a plane passing through or near a position of any of the plurality of teeth comprising a dentition.

In the present Specification, a "toothbrush" has a brush member and a brush supporting member that supports the brush member. As an example, the unit for tooth brushing action 16 described in the patent document 1 corresponds to a toothbrush in the present Specification.

In the patent document 1, the unit for tooth brushing action 16, i.e., the toothbrush, is driven by being connected to the power transmission shaft 22 of the drive unit 12. In the present Specification, in addition to being driven in a similar manner, it is assumed that a motion if given by a user gripping the brush supporting member of the toothbrush or a gripping member connected to the brush supporting member.

### SOLUTION TO PROBLEM

To achieve the objective, the first aspect of the invention is a toothbrush comprising a first brush member for brushing a buccal or lingual side of a first dentition in an oral cavity, a first guide for guiding movement of the first brush member extending in a dentition direction on a buccal side of the first dentition, a guide connector for connecting the first guide directly or indirectly to a drive source, and a first brush frame connected to the first guide for fixing the first brush member, wherein the first guide has a first region and a second region having a lower rigidity than the first region.

The second aspect of the invention is the toothbrush of the first aspect, wherein the guide connector has a movable portion that can rotate the first guide in a direction perpendicular or substantially perpendicular to a direction in which the first guide extends.

The third aspect of the invention is the toothbrush of the second aspect, wherein the movable portion is an axis of rotation in the perpendicular or substantially perpendicular direction.

The fourth aspect of the invention is the toothbrush of the first or the second aspect, wherein the first brush frame extends in the dentition direction on the buccal side of the first dentition.

The fifth aspect of the invention is the toothbrush of the first aspect, wherein the first region has a bent structure that bends toward the first dentition.

The sixth aspect of the invention is the toothbrush of any one of the first to the fifth aspects, further comprising a second guide connected to the first region of the first guide and extending in the lingual side of the first dentition, wherein the first brush frame is connected to the first guide via the second guide.

The seventh aspect of the invention is the toothbrush of the sixth aspect, further comprising an extension guide connected to the first guide, wherein the extension guide has a region extending perpendicular or substantially perpendicular to a dentition direction.

The eighth aspect of the invention is the toothbrush of any one of the first to the fifth aspects, further comprising a second brush frame connected to the first guide or the first brush frame for fixing a second brush member, wherein the second brush frame extends in the dentition direction on the buccal side of the first dentition.

The nineth aspect of the invention is the toothbrush of any one of the first to the fifth aspects, a second brush member for brushing a buccal or lingual side of the first dentition or a second dentition different from the first dentition, a second guide extending in a dentition direction on the buccal or lingual side of the second dentition for guiding movement of the second brush member, connected to the guide connector, and a second brush frame connected to the second guide for fixing the second brush member.

The tenth aspect of the invention is the toothbrush of any one of the first to the nineth aspects, wherein the first brush frame is removable from the first guide.

According to an aspect of the invention, in a toothbrush for performing a tooth brushing action by providing lateral movement in the plane in which the dentition exists, a guide for guiding the movement of the brush member, which extends in the dentition direction on the buccal side of said dentition, can be deformable when inserted into the oral cavity and can be further deformed according to the movement given, thereby adapting to various dental arches and easily brushing multiple teeth comprising a dental arch.

### BRIEF DESCRIPTION OF DRAWINGS

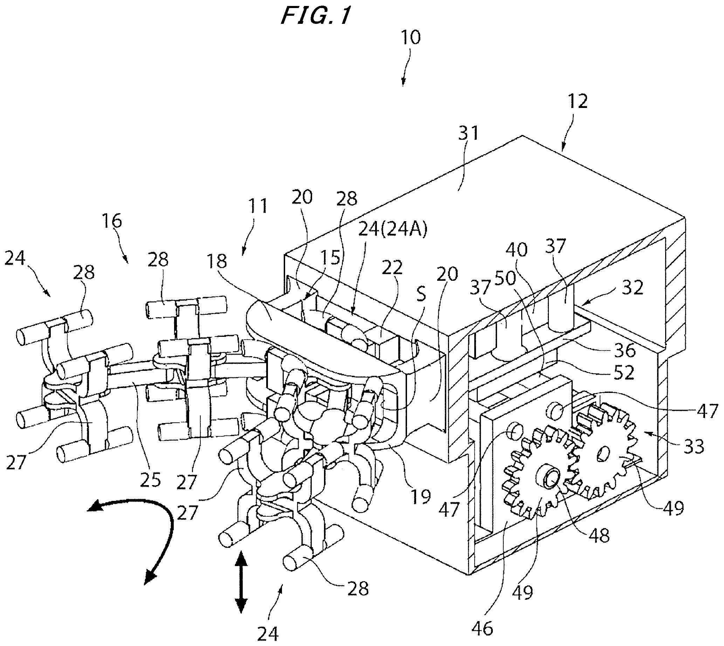

FIG. 1 shows an automatic tooth brushing apparatus according to the prior art.
FIG. 2A is a top view of the toothbrush of the first embodiment of the present invention.
FIG. 2B This is a diagonal view of the toothbrush of the first embodiment of the present invention.
FIG. 3 shows the deformations of the toothbrush caused by parallel motion of the guide connector in the lateral direction.
FIG. 4 shows an example of a guide for the first embodiment of the present invention.
FIG. 5A a diagonal view of an alternative of the toothbrush of the first embodiment of the present invention.
FIG. 5B a side view of an alternative of the toothbrush of the first embodiment of the present invention.
FIG. 6 a diagonal view of the toothbrush of the second embodiment of the present invention.
FIG. 7A is a top view of the toothbrush of the third embodiment of the present invention.
FIG. 7B is a diagonal view of the toothbrush for the third embodiment of the present invention.
FIG. 8 shows an example of a guide for the third embodiment of the present invention.
FIG. 9 shows another example of a guide for the third embodiment of the present invention.

### DESCRIPTION OF EMBODIMENTS

The following is a detailed description of the embodiments of the present invention with reference to the drawings.

### (First embodiment)

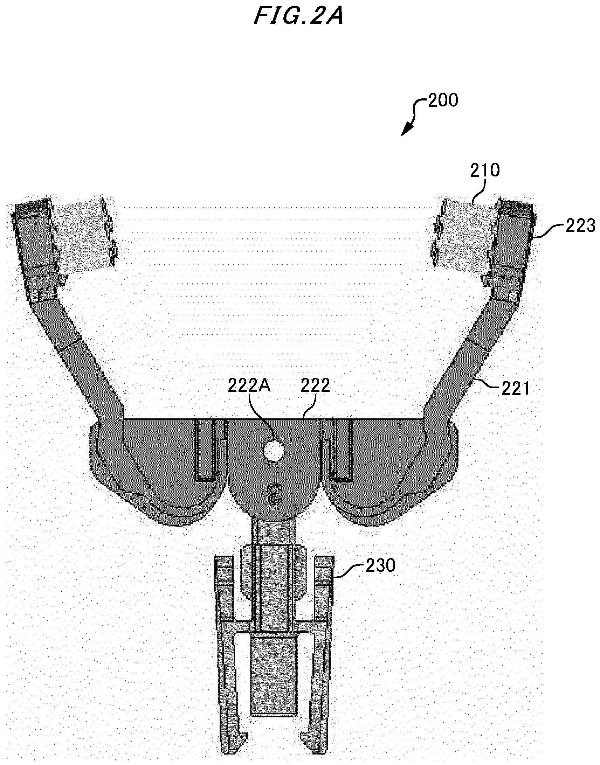

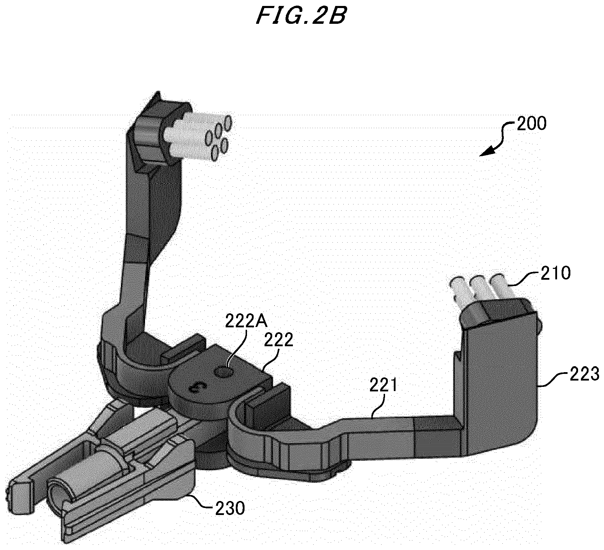

FIGS. 2A and 2B show a toothbrush according to the first embodiment of the present invention. The toothbrush 200 comprises a brush member 210 and a brush supporting member for supporting the brush member 210. The brush supporting member has a guide 221 for guiding the movement of the brush member 210, a guide connector 222 for connecting the guide 221 directly or indirectly to a drive unit, and a brush frame 223 connected to the guide 221 for fixing the brush member 210. For simplicity, no reference number is given to the entire brush supporting member.

In the illustrated example, an attachment 230 for attachment to a drive unit is connected to the guide connector 222, and the guide 221 is indirectly connected to the drive unit via the attachment 230 by the guide connector 222. When the user grips the toothbrush 200 and gives a motion to it, the user may connect a gripping member to the attachment 230 instead of the drive unit or connect a gripping member to the guide connector 222 instead of the attachment 230 and grip the gripping member. It is added that each member referred to herein is not necessarily limited to being formed as a separate component, but it is also intended that a plurality of members be formed as an integral unit, as the attachment 230 may be integrally formed with the guide connector 222.

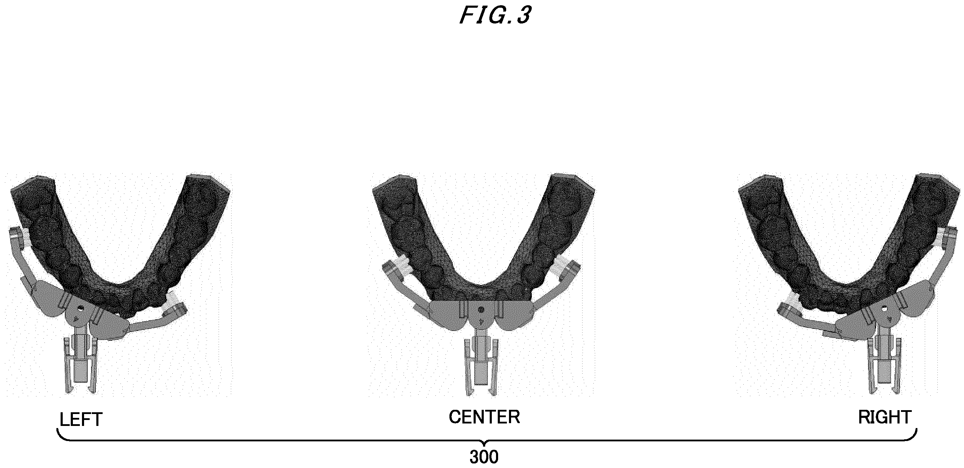

FIG. 3 shows the deformation of a toothbrush caused by parallel motion of a guide connector in the lateral direction. A round square dental arch on the mandibular side is modeled and a series of deformations 300 is shown from the maxillary side. The toothbrush 200, when inserted into an oral cavity, goes from the unloaded state shown in FIGS. 2A and 2B to the deformed state shown at the center position. In this state, the force applied to the brush member 210 from the dentition deforms the elastic region of the guide 221, described below, and the toothbrush 200 adapts to the dental arch. The guide 221 can then be further deformed in response to a lateral movement of the guide connector 222 to maintain the adaptation to the dental arch.

Preferably, the guide connector 222 is rotatable in the direction along the dentition, as shown in FIG. 3, by having an axis of rotation 222A that is perpendicular or substantially perpendicular to the lateral motion given to the guide connector 222.

In detail, the toothbrush 200 shown in FIGS. 2A and 2B comprises a brush member 210 for brushing a buccal side of a dentition, a guide 221 for guiding a movement of the brush member 210 that extends in the buccal side of the dentition in a dentition direction in an oral cavity, a guide connector 222 for connecting the guide 221 directly or indirectly to a drive source, and a brush frame 223 connected to the guide 221 for fixing the brush member 210. A guide connector 222 for connecting the guide 221 to a drive source, and a brush frame 223 connected to the guide 221 for fixing the brush member 210. For example, the guide 221 may be connected indirectly to a drive source via the guide connector 222 by connecting the guide 221 to a guide connection plate and connecting the guide connector 222 to the guide connection plate. Here, the drive source can be a drive unit, a user's hand, or the like. The term "extending in the dentition direction" means extending toward the direction in which a plurality of teeth comprising an upper dentition or a lower dentition are aligned. It is preferrable for the guide connector 222 to have an axis of rotation 222A perpendicular or substantially perpendicular to a direction in which the guide 221 extends, as described above, and more generally, it if preferrable for the guide connector 222 to have a movable portion that can rotate the guide 221 in a direction perpendicular or substantially perpendicular to a direction in which the guide 221 extends.

As illustrated in the figures, when brushing the left and right teeth in the oral cavity simultaneously, the toothbrush 200 can comprise, in addition to the first guide 221 extending in the buccal side of the dentition in the dentition direction in the oral cavity, a second guide extending in the opposite direction to the first guide in the buccal side of the dentition in the oral cavity. In this situation, viewed from a direction perpendicular to the dentition direction, the axis of rotation 222A of the guide connector 222 is located between the first guide 221 and the second guide along the dentition direction. In other words, it is preferrable for the axis of rotation 222A to be located between the first guide 221 and the second guide along a direction perpendicular or substantially perpendicular to the axis of rotation 222A. A reference number is not given to the second guide for simplicity.

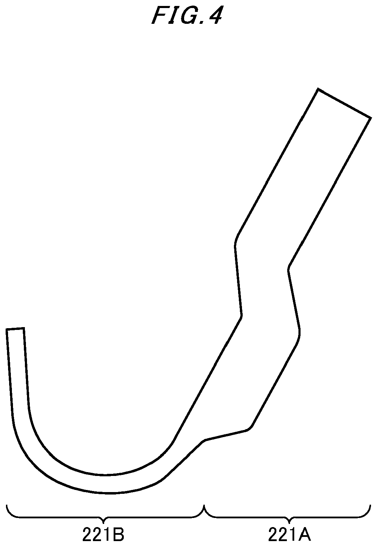

FIG. 4 shows an example of a guide according to the first embodiment of the present invention. The guide 221 has a first region 221A and a second region 221B with a lower elastic modulus than the first region 221A. By connecting the brush frame 223 to the first region 221A and the second region 221B to the guide connector 222, the force applied from a dentition to the brush member 210 fixed to the brush frame 223 is transmitted to the second region 221B through the brush frame 223 and the first region 221A. The second region 221B is deformed due to the relatively low elasticity of the second region 221B. The deformation serves to guide a movement of the brush member 210 to adapt to the dental arch against which it is pressed.

In order to make the elastic modulus of the second region 221B lower than that of the first region 221A, it is preferrable for the guide 221 to be integrally molded so that the thickness of the first region 221A is thinner than that of the second region 221B. It is also possible to use different materials for the first region 221A and the second region 221B. An example of a material is a plastic material such as POM.

The guide 221 extends in the buccal side of the dentition in the oral cavity in the dentition direction. It may have a structure bent toward the dentition in the first region 221A, as shown in FIG. 4. Such a bent structure reduces the opening width of the brush frame 223 connected to the guide 221, making it easier to insert into the oral cavity.

In the description of FIG. 4, the second region 221B of the guide 221 is described as being connected to the guide connector 222, but there may be an additional third region with higher elasticity than the second region 221B, and connection may be made to the guide connector 222 in the third region. In other words, it is sufficient that the brush frame 223, the first region 221A, and the second region 221B are arranged in this order along a dentition direction, viewed from a direction perpendicular to the dentition direction. If the guide connector 222 has a rotary axis 222A, as long as the brush frame 223, the first region 221A, the second region 221B, and the rotary axis 222A are arranged in this order along a dentition direction, viewed from a direction perpendicular to the dentition direction, a third region of the guide 221 between the second region 221B and the rotary axis 222A may intervene.

The brush frame 223 may be a removable component from the guide 221. In this way, the toothbrush 200 can continue to be used by replacing the brush member 210 fixed to the brush frame 223 with a new one when the brush member 210 becomes worn through use. The brush frame 223 may be integrally formed with the guide 221, and the guide 221 and brush frame 223 may be a removable component from the guide connector 222. It is added herein that a plurality of members being "connected" includes cases where those members are integrally formed. It is preferrable for the brush frame 223 to have a region extending in a direction perpendicular or substantially perpendicular to a direction of a dentition so that the brush member 210 fixed to a portion thereof contacts an upper dentition or a lower dentition when the toothbrush 200 is inserted into an oral cavity.

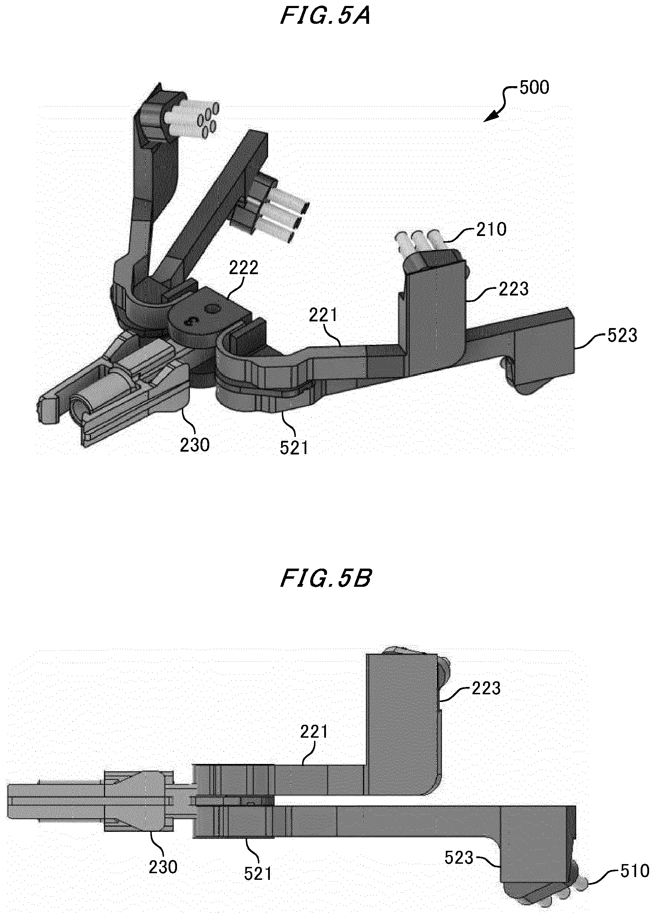

FIGS. 5A and 5B show an alternative of the toothbrush according to the first embodiment of the present invention. The toothbrush 500 comprises, in addition to the first brush 210 for brushing the buccal side of one of the dentitions, a first brush 510 for brushing the buccal side of the other dentition. More particularly, the toothbrush 500 comprises a first guide 221 connected to the guide connector 222, a first brush frame 223 connected to the first guide 221, a first brush member 210 fixed to the first brush frame 223, and further comprises a second guide 521 connected to the guide connector 222, a second brush frame 523 connected to the second guide 521, and a second brush member 510 connected to the second brush frame 523. The second guide 521 and the second brush frame 523 serve the same role as the first guide 221 and the first brush frame 223, except that the target dentition is different.

By independently connecting the first guide 221 for one dentition and the second guide 521 for the other dentition to the brush connector 222, it is possible to cause deformations in response to the difference between dental arches of an upper dentition and a lower dentition. By positioning the first brush member 210 and the second brush member 510 at different positions along a dentition direction, the space in an oral cavity can be effectively used to improve the user's experience.

Although the first guide 221 and the second guide 521 were described as guides for brushing different dentitions, even if they are used for brushing the same dentition, the same point can be made by positioning the first brush member 210 and the second brush member 510 at different positions along the dentition direction, thereby effectively using the space in the oral cavity to improve the user's experience.

### (Second embodiment)

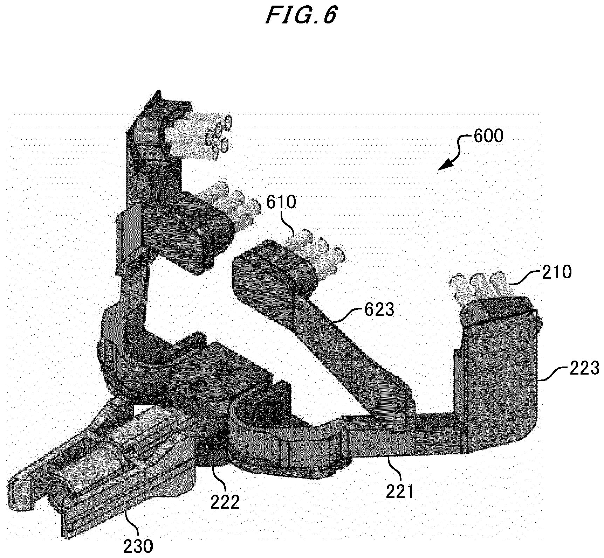

FIG. 6 shows a toothbrush according to the second embodiment of the present invention. The toothbrush 600 comprises a guide 221, a guide connector 222 to which the guide 221 is connected, a first brush frame 223 connected to the guide 221, a second brush frame 623 connected to the guide 221, a brush member 210 fixed to the first brush frame 223, a second brush member 610 fixed to the second brush frame 623.

The second brush frame 623 is the same as the first brush frame 223 in that it extends in a buccal side of a dentition in an oral cavity in a dentition direction, but the second brush member 610 is positioned at a different location along the dentition direction than the first brush member 210. By providing the second brush frame 623 in this manner, it is possible to brush multiple teeth comprising the dentition at the same time.

In the example of FIG. 6, the second brush frame 623 is shown as being connected to the guide 221, but it can be fixed to the first brush frame 223 and indirectly connected to the guide 221 via the first brush frame 223.

Although a further guide can be interposed between the second brush frame 623 and the guide 221 or the first brush frame 223, it is preferable to connect the second brush frame 623 directly to the guide 221 or the first brush frame 223 due to space constraints in the oral cavity.

### (Third embodiment)

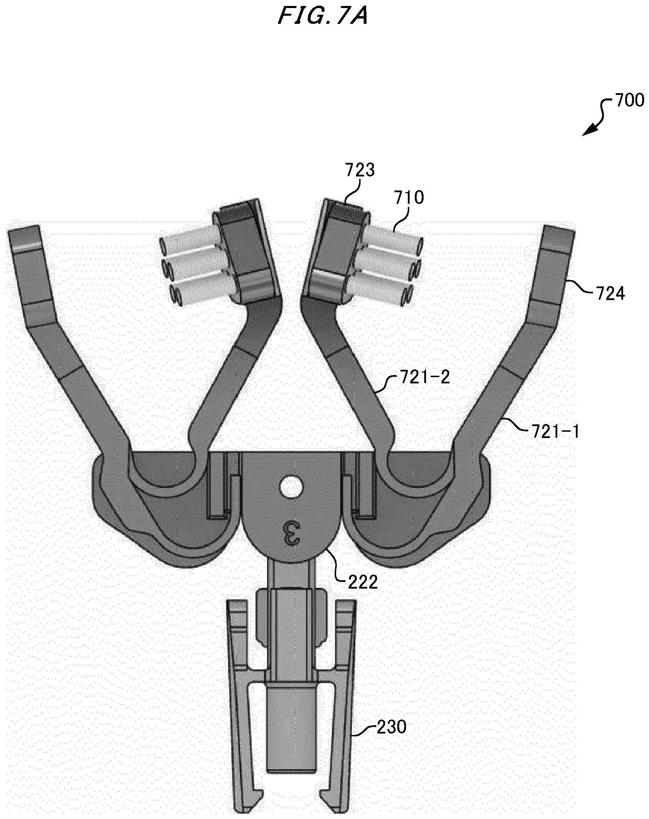

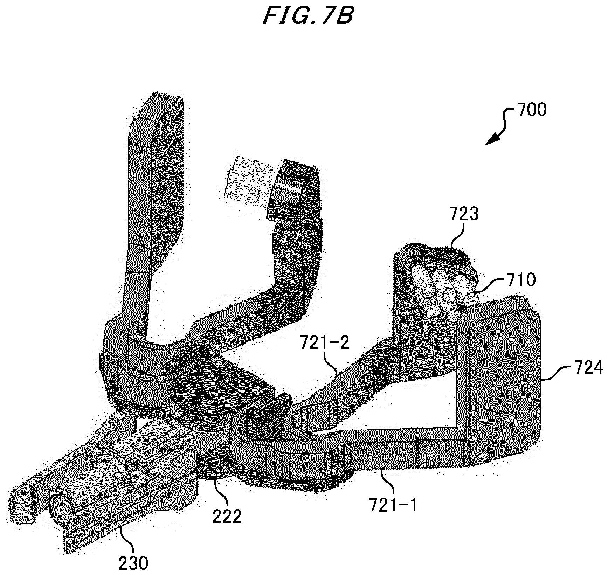

FIGS. 7A and 7B show a toothbrush according to the third embodiment of the present invention. The toothbrush 700 comprises a first guide 721-1 extending in a buccal side of a dentition in the oral cavity in a dentition direction, a second guide 721-2 connected to the first guide 721-1 and extending in a lingual side of the dentition, a guide connector 222 to which the first guide 721-1 is connected, a brush frame 723 connected to the second guide 721-2, a brush member 710 fixed to the brush frame 723, and an extension guide 724 fixed to the first guide 721-1. Here, the brush frame 723 is indirectly connected to the first guide 721-1 via the second guide 721-2.

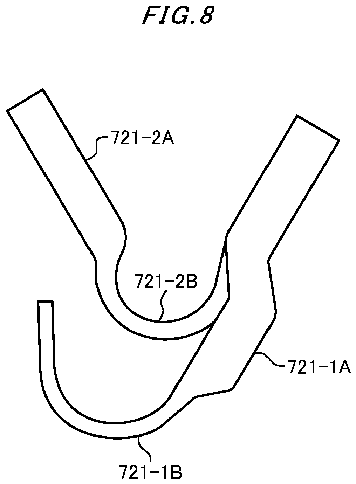

As shown in FIG. 8, the first guide 721-1 has a first region 721-1A and a second region 721-1B with a lower elastic modulus than the first region 721-1A. The second guide 721-2 has a first region 721-2A and a second region 721-2B with a lower elastic modulus than the first region 721-2A, and the second region 721 -2B is connected to the first region 721-1A. A third region (not shown) with a higher elastic modulus than the second region 721-2B may be interposed between the second region 721-2B and the first region 721-1A.

The extension guide 724 is subjected to force from the dentition on the buccal side of the dentition, thereby pressing the brush 710, which is positioned in the lingual side of the dentition, against the dentition. In this process, the second region 721-1B of the first guide 721-1 and the second region 721-2B of the second guide 721-2 deform and the toothbrush 700 adapts to the dental arch. The first guide 721-1 and the second guide 721-2 can then further deform in response to a lateral movement of the guide connector 222 to maintain the adaptation to the dental arch. It is preferrable for the extension guide 724 to have a region extending in a direction perpendicular or substantially perpendicular to the dentition direction so that a portion thereof contacts the maxillary or mandibular dentition when the toothbrush 700 is inserted into the oral cavity.

In FIGS. 7A and 7B, the extension guide 724 is shown as being connected to the first guide 721-1. As in the first embodiment, a brush frame with a brush member fixed to it may be connected so that the buccal and lingual sides of the dentition can be brushed simultaneously.

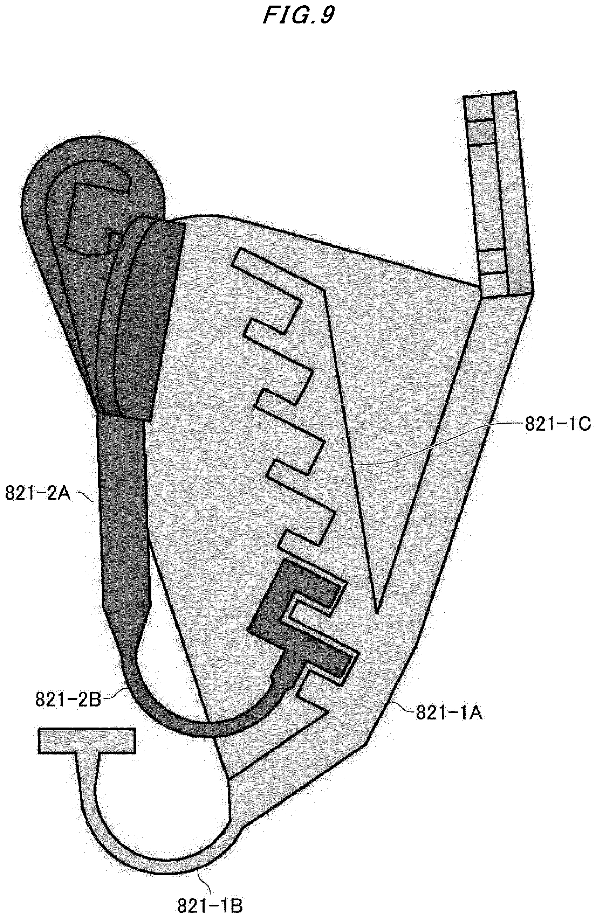

FIG. 9 shows another example of a guide according to the third embodiment of the present invention. In FIG. 9, a connection structure 821-1C is provided in the first region 821-1A of the first guide 821-1 to detachably connect the second guide 821-2. For simplicity, FIG. 9 shows an example in which expansion guides are connected to respective guides, but it is possible to connect a brush frame to one or both guides. A third region (not shown) with a higher elastic modulus than the second region 821-2B may be interposed between the second region 821-2B and the first region 821-1A. By providing such a structure 821-1C, the position of the second guide 821-2 can be adjusted and the space in an oral cavity of a user can be effectively used to improve the user's experience. The connecting structure 821-1C can, for example, have a plurality of convex portions, as shown in the figure, and concave portions that fit into such connecting structure 821-1C can be provided in the second region 821-2B.

### REFERENCE SIGNS LIST

- 200: toothbrush
- 210: brush member (corresponds to "first brush member")
- 221: guide (corresponds to the "first guide")
- 221A: first region
- 221B: second region
- 222: guide connector
- 222A: axis of rotation
- 223: brush frame (corresponds to "first brush frame")
- 230: attachment
- 300: series of deformations
- 500: toothbrush
- 510: second brush member
- 521: second guide
- 523: second brush frame
- 600: toothbrush
- 610: second brush member
- 623: second brush frame
- 700: toothbrush
- 710: brush member
- 721-1: first guide
- 721-1A: first region
- 721-1B: second region
- 721-2: second region
- 721-2A: first region
- 721-2B: second region
- 723: brush frame (corresponds to "first brush frame")
- 724: extension Guide
- 821-1A: first region of first guide
- 821-1B: second region of first guide
- 821-1C: connection structure
- 821-2A: first region of second guide
- 821-2B: second region of second guide

## Claims

1. A toothbrush comprising:
a first brush member for brushing a buccal or lingual side of a first dentition in an oral cavity,
a first guide for guiding a movement of the first brush member extending in a dentition direction on a buccal side of the first dentition,
a guide connector for connecting the first guide directly or indirectly to a drive source, and
a first brush frame connected to the first guide for fixing the first brush member,
wherein the first guide has a first region and a second region having a lower rigidity than the first region.

2. The toothbrush according to claim 1, wherein the guide connector has a movable portion that can rotate the first guide in a direction perpendicular or substantially perpendicular to a direction in which the first guide extends.

3. The toothbrush according to claim 2, wherein the movable portion is an axis of rotation in the perpendicular or substantially perpendicular direction.

4. The toothbrush according to claim 1 or 2, wherein the first brush frame extends in the dentition direction on the buccal side of the first dentition.

5. The toothbrush according to claim 1, wherein the first region has a bent structure that bends toward the first dentition.

6. The toothbrush according to any one of claims 1 to 5, further comprising a second guide connected to the first region of the first guide and extending in the lingual side of the first dentition,
wherein the first brush frame is connected to the first guide via the second guide.

7. The toothbrush according to claim 6, further comprising an extension guide connected to the first guide,
wherein the extension guide has a region extending perpendicular or substantially perpendicular to a dentition direction.

8. The toothbrush according to any one of claims 1 to 5, further comprising a second brush frame connected to the first guide or the first brush frame for fixing a second brush member,
wherein the second brush frame extends in the dentition direction on the buccal side of the first dentition.

9. The toothbrush according to any one of claims 1 to 5, further comprising:
a second brush member for brushing a buccal or lingual side of the first dentition or a second dentition different from the first dentition,
a second guide extending in a dentition direction on the buccal or lingual side of the second dentition for guiding a movement of the second brush member, connected to the guide connector, and
a second brush frame connected to the second guide for fixing the second brush member.

10. The toothbrush according to any one of claims 1 to 9, wherein the first brush frame is removable from the first guide.
